# EUROPÄISCHE PATENTSCHRIFT

(11) **EP 2 628 063 B1**
(45) Veröffentlichungstag und Bekanntmachung des Hinweises auf die Patenterteilung: **10.01.2018**
(21) Anmeldenummer: 11781755.1
(22) Anmeldetag: 13.10.2011
(51) Int. Cl.: G05F 1/56, G05B 19/042

(54) **STROMAUSGANGSSTUFE MIT AUTOMATISCHER AKTIV-PASSIV UMSCHALTUNG**
CURRENT OUTPUT STAGE HAVING AUTOMATIC ACTIVE-PASSIVE SWITCHING
ÉTAGE DE SORTIE DE COURANT À COMMUTATION ACTIF-PASSIF AUTOMATIQUE

(30) Priorität: 13.10.2010 DE 102010038152
(43) Veröffentlichungstag der Anmeldung: 21.08.2013
(73) Patentinhaber: Phoenix Contact GmbH & Co. KG, 32825 Blomberg (DE)
(72) Erfinder: MEIER, Heinz-Wilhelm, 32689 Kalletal (DE)
(74) Vertreter: Michalski Hüttermann & Partner Patentanwälte mbB
(86) Internationale Anmeldenummer: PCT/EP2011/067871
(87) Internationale Veröffentlichungsnummer: WO 2012/049239

(56) Entgegenhaltungen:
- WO-A1-01/76037
- DE-A1- 3 817 078
- US-A1- 2006 244 494
- US-A1- 2008 007 307

## Beschreibung

Die Erfindung betrifft eine Stromausgangsstufe mit automatischer aktiv-passiv Umschaltung.

Aus dem Stand der Technik sind zahlreiche Stromausgangsstufen bekannt. Diese werden generell als aktive Stromausgangsstufen oder als passive Stromausgangsstufen zur Verfügung gestellt.

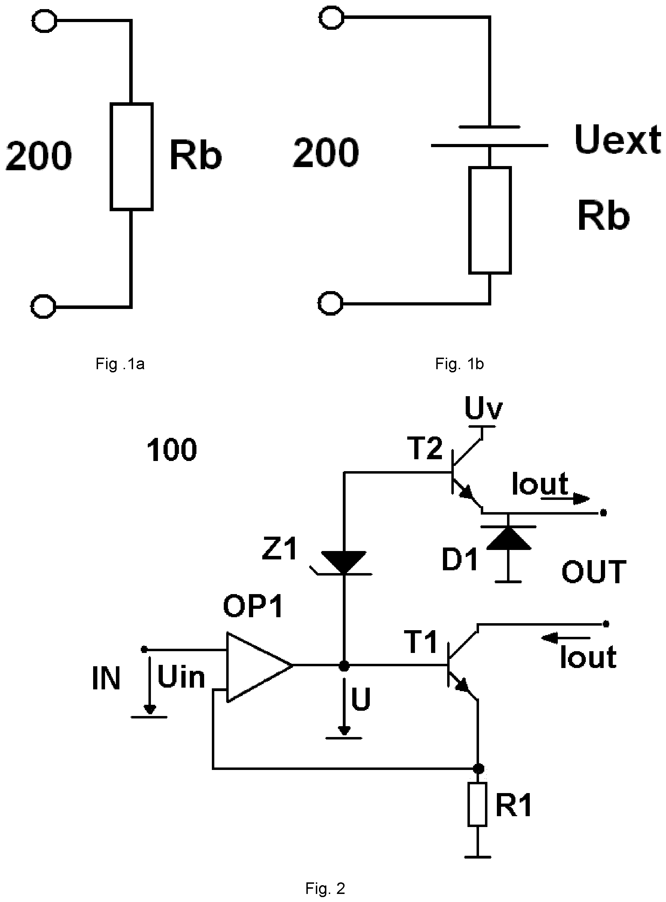

Bei einer aktiven Stromausgangsstufe wird der Ausgangsstrom von der Stromausgangsstufe geregelt und die Energie für den Ausgangsstrom von der Stromausgangsstufe bereitgestellt. Diese aktive Stromausgangsstufe ist zum Betrieb eines passiven Empfängers- wie er in Figur 1a dargestellt ist - geeignet.

Bei einer passiven Stromausgangsstufe wird der Ausgangsstrom von der Stromausgangsstufe geregelt und die Energie für den Ausgangsstrom extern von einem aktiven Empfänger bereitgestellt. Diese passive Stromausgangsstufe ist zum Betrieb eines aktiven Empfängers- wie er in Figur 1b dargestellt ist - geeignet.

Beim Einsatz von Stromausgangsstufen ist es daher immer erforderlich zunächst zu wissen, ob der mit Strom zu versorgende Eingang ein aktiver oder ein passiver Eingang ist.

Hierbei kommt es jedoch häufig zu einem fehlerhaften Einsatz, da in vielen Fällen nicht ohne Weiteres ersichtlich ist, ob der mit Strom zu versorgende Eingang ein aktiver oder ein passiver Eingang ist.

Auch bei der Produktion erweist sich die Entwicklung und Bevorratung von unterschiedlichen Stromausgangsstufen als kostspielig.

Neuere Stromausgangsstufen vereinen zwar beide Möglichkeiten, jedoch ist bei diesen eine physikalische Trennung in unterschiedliche Ausgänge vorhanden, so dass der Verwender beim Einsatz die entsprechenden Ausgänge auswählen muss. Solche Stromausgangsstufen finden z.B. in Signal-Trennern mit der Bezeichnung MACX MCR-EX-SL-RPSSI-I-SP der Anmelderin Verwendung. Auch aus der DE 10 2006 024 311 ist eine derartige Vorrichtung bekannt.

Hierbei kommt es jedoch auch häufig zu einem fehlerhaften Einsatz, da in vielen Fällen nicht ohne Weiteres ersichtlich ist, ob der mit Strom zu versorgende Eingang ein aktiver oder ein passiver Eingang ist.

Nachteilig ist weiterhin, dass bei dieser Ausführung mehr Anschlussklemmen bereitzustellen sind, so dass die Gehäusegröße zunimmt, wohingegen der allgemeine Trend hin zu einer Verkleinerung der Gehäusegrößen zeigt.

Aus der US 2008/007307 A1 ist eine Schaltung zur Übermittlung eines analogen Signalwertes mittels eines elektrischen Messstromes bekannt. Die Schaltung weist eine Reihenschaltung eines Fühlerwiderstandes, über den der dem Signalwert entsprechende Messstrom fließt, mit mindestens zwei parallel geschalteten Stellgliedern und mit mindestens zwei Messwiderständen auf, zwischen denen eine dem Messstrom proportionale Spannung so zurückgekoppelt wird, dass damit über eine erste Überwachungseinrichtung eine Überwachung der Messwiderstände ermöglicht wird. Die Schaltung kann wahlweise aktiv als Stromquelle oder passiv als Stromsenke betrieben werden, wozu sie eine Regelungseinrichtung und zwei Transistoren aufweist. Die Umschaltung erfolgt über einen manuellen Schalter.

Vor diesem Hintergrund hat es sich die Erfindung zur Aufgabe gestellt, eine Stromausgangsstufe bereitzustellen, die einen oder mehrere aus dem Stand der Technik bekannten Nachteile auf erfinderische Weise löst.

Die Aufgabe wird gelöst durch eine Stromausgangsstufe aufweisend einen Eingang, einen Ausgang zur Verbindung mit einem Eingang einer mit Strom zu versorgenden Einheit, eine Regelstufe, die den Ausgangsstrom einstellt, eine Energieversorgungsstufe, welche ausgeführt ist, Energie für den Ausgangsstrom zur Verfügung zu stellen, wobei die Regelstufe einen ersten Transistor, einen zweiten Transistor, einen Operationsverstärker und eine Zenerdiode aufweist, der zweite Transistor über die Zenerdiode angeschlossen ist, im passiven Betriebsfall, wenn an den Ausgang eine aktive Einheit angeschlossen ist, der zweite Transistor gesperrt ist, und der Operationsverstärker über den ersten Transistor den Ausgangsstrom regelt, und im aktiven Betriebsfall die Ausgangsspannung des Operationsverstärkers die Durchbruchspannung der Zenerdiode überschreitet, und der zweite Transistor den Ausgangsstrom über die Energieversorgungsstufe so regelt, dass sie Energie für den Ausgangsstrom zur Verfügung stellt.

Die vorliegende Anmeldung betrifft auch eine Stromausgangsstufe aufweisend einen Eingang, einen Ausgang zur Verbindung mit einem Eingang einer mit Strom zu versorgenden Einheit, eine Regelstufe, die den Ausgangsstrom einstellt, und eine Energieversorgungsstufe, welche ausgeführt ist, Energie für den Ausgangsstrom zur Verfügung zu stellen. Die Stromausgangsstufe weist weiterhin eine Erkennungseinrichtung auf, welche mit dem Ausgang der Stromausgangsstufe verbunden ist und ausgeführt ist, am Ausgang der Stromausgangsstufe zu erkennen, ob die Stromausgangsstufe passiv oder aktiv betrieben wird, und bei Erkennen des aktiven Betriebes die Energieversorgungsstufe so steuert, dass sie Energie für den Ausgangsstrom zur Verfügung stellt, und bei Erkennen des passiven Betriebes die Energie für den Ausgangsstrom vom Eingang der mit Strom zu versorgenden Einheit zur Verfügung gestellt wird.

In Fortbildungen der Stromausgangsstufe ist die Regelstufe ein Spannung/Strom-Wandler oder ein Strom/Strom-Wandler.

In einer weiteren Ausgestaltung der Erfindung ist die Stromausgangsstufe für den Bipolar-Betrieb ausgelegt.

In noch einer weiteren Ausführungsform weist die Regelstufe einen Operationsverstärker auf.

In einer weiteren Ausführungsform weist die Erkennungseinrichtung einen oder mehrere Transistoren auf.

In noch einer weiteren Ausführungsform der Erfindung weist die Erkennungseinrichtung zumindest einen MOS-FET Transistor auf.

Nachfolgend wird die Erfindung näher unter Bezugnahme auf die Figuren erläutert werden.
In diesen zeigt:
- Figur 1a einen passiven Empfänger und Figur 1b einen aktiven Empfänger,
- Figur 2 eine erfindungsgemäße Beschaltungsvariante einer Stromausgangsstufe mit automatischer aktiv-passiv Umschaltung,
- Figur 3 eine weitere erfindungsgemäße Beschaltungsvariante einer Stromausgangsstufe mit automatischer aktiv-passiv Umschaltung, und
- Figur 4 noch eine weitere erfindungsgemäße Beschaltungsvariante einer Stromausgangsstufe mit automatischer aktiv-passiv Umschaltung.

In Figur 2 ist eine erfindungsgemäße Ausführungsform einer Stromausgangsstufe 100 dargestellt. Diese verfügt über einen Eingang IN und über einen Ausgang OUT zur Verbindung mit einem Eingang einer mit Strom zu versorgenden Einheit 200.

Diese mit Strom zu versorgende Einheit 200 kann entweder passiv wie in Figur 1a dargestellt oder aktiv wie in Figur 1b dargestellt sein.

Weiterhin weist die Stromausgangsstufe 100 eine Regelstufe OP1, die den Ausgangsstrom einstellt, und eine Energieversorgungsstufe Uv, welche Energie für den Ausgangsstrom lout zur Verfügung stellen kann, auf.

Die Stromausgangsstufe 100 weist weiterhin einen ersten Transistor T1 auf, der den Ausgangsstrom lout im passiven Betriebsfall regelt und enthält einen zweiten Transistor T2, der der Ausgangsstrom Iout im aktiven Betriebsfall regelt, wobei der erste Transistor T1 und der zweite Transistor T2 von der Regelstufe OP1 gesteuert wird, und wobei im aktiven Betriebsfall die Energieversorgungsstufe Uv so gesteuert wird, dass sie Energie für den Ausgangsstrom lout zur Verfügung stellt.

Anders ausgedrückt, die Stromausgangsstufe weist eine Erkennungseinrichtung T1, T2, Z1 auf, welche am Ausgang OUT erkennt, ob die Stromausgangsstufe passiv oder aktiv betrieben wird und bei Erkennen des aktiven Betriebes (aktiver Betriebsfall) die Energieversorgungsstufe Uv so steuert, dass sie Energie für den Ausgangsstrom Iout zur Verfügung stellt, und bei Erkennen des passiven Betriebes (passiver Betriebsfall) die Energie für den Ausgangsstrom Iout vom Eingang der mit Strom zu versorgenden Einheit 200 zur Verfügung gestellt wird.

Zum besseren Verständnis wird nun die Arbeitsweise näher erläutert.

Wird an den Ausgang OUT eine aktive Einheit 200 wie in Figur 1b schematisch dargestellt angeschlossen, so fließt der Ausgangsstrom lout getrieben durch die dortige externe Spannungsquelle Uext durch die Bürde Rb der Einheit 200. Von dort wird der Strom über T1, R1 und D1 geleitet und erreicht so wieder die Einheit 200. Hierbei wird der Ausgangsstrom lout durch T1 eingestellt

In der dargestellten Ausführungsform gemäß Figur 2 ist der OP1 Teil eines Spannungs-Strom-Wandlers, somit einer Regelstufe, die den Strom durch T1 proportional zu der Spannung Uin am Eingang IN einstellt.

Da T2 über eine Z-Diode Z1 angeschlossen ist, führt diese Betriebsart dazu, dass der Transistor T2 gesperrt ist, d. h. es fließt kein Strom von der Energieversorgung Uv. Somit fließt der Ausgangsstrom lout über den geregelten T1.

Wird wiederum an den Ausgang OUT eine passive Einheit wie in Figur 1a schematisch dargestellt angeschlossen, so versucht der Operationsverstärker OP1 zunächst mit Hilfe des Transistors T1 den Ausgangsstrom einzustellen.

Da jedoch der Empfänger keine Stromquelle aufweist, führt auch ein weiteres Öffnen des Transistors T1 zunächst nicht zu einem Stromfluss Iout, da auch T2 sperrt.

Um dem entgegen zu steuern, wird der Transistor immer weiter angesteuert und die Ausgangsspannung U am Operationsverstärker erhöht.

Überwindet die Ausgangsspannung U des Operationsverstärkers OP1 als Teil eines Spannungs-Strom-Wandlers, somit einer Regelstufe, die Durchbruchspannung oder dergleichen der exemplarisch dargestellten Z-Diode Z1, so kann nun T2 die Regelung des Stromes aus der Energieversorgungsstufe Uv übernehmen.

Nun fließt der Ausgangsstrom Iout getrieben von der Energieversorgungsstufe Uv durch T2 und anschließend über die Bürde Rb den voll durchgeschalteten (geöffneten) Transistor T1 und über R1 zur Energieversorgungsstufe Uv zurück.

Es versteht sich von selbst, dass für die in den Figuren dargestellten Transistoren T1 und T2 verschiedene Arten von Transitoren zum Einsatz kommen können, so dass die Auswahl nicht auf Bipolar Transistoren, FET oder Darlingtontransistoren beschränkt ist.

Weiterhin versteht es sich von selbst, dass T1 und T2 auch von unterschiedlichem Typ sein können, d. h. T1 kann ein FET-Transistor sein, während T2 ein Bipolar-Transistor ist.

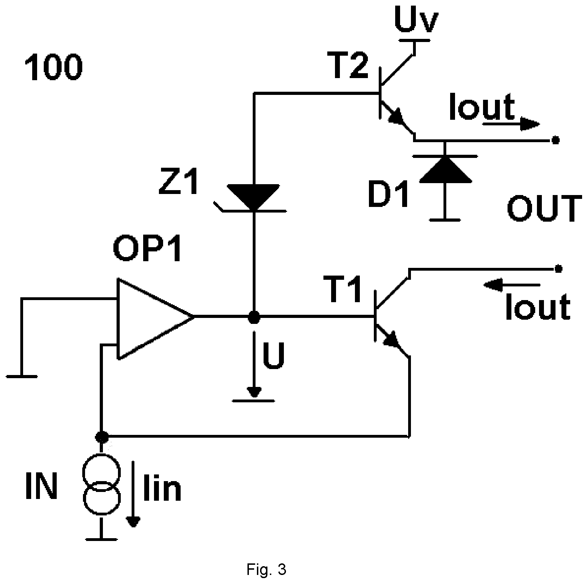

Die in Figur 3 dargestellte Ausführungsform unterscheidet sich im Wesentlichen von der Ausführungsform in Figur 2 darin, dass hier anstatt eines Spannungs-Strom-Wandlers als Regelungsstufe ein Strom-Strom-Wandler als Regelungsstufe zum Einsatz kommt, wie man leicht an der unterschiedlichen Beschaltung des Operationsverstärkers OP1 erkennen kann.

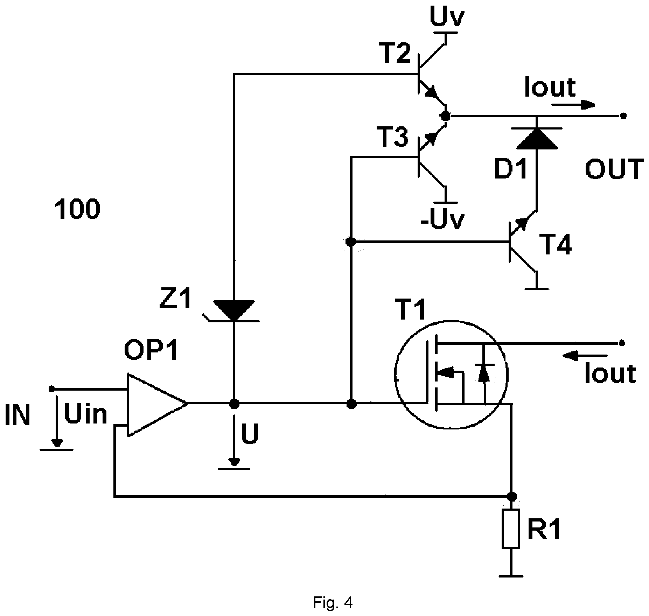

Die in Figur 4 dargestellte Ausführungsform ermöglicht darüber hinaus einen Bipolar Betrieb.

Hierbei bilden T2 und T3 eine bipolare Ausgangsstufe, welche den Strom ähnlich zu T2 aus Figur 2 und Figur 3 im aktiven Modus, d .h. bei passiver Einheit 200, einstellt.

T1 wiederum stellt den Strom im passiven Modus, d. h. bei aktiver Einheit 200, ein.

T4 stellt einen Schalter dar, der die Diode D1 im passiven Betrieb einschaltet.

Dabei sind die Ansprechschwellen der Transistoren so gewählt, dass bei negativen Ausgangsspannungen U des Operationsverstärkers OP1 der Transistor T3 den Ausgangsstrom lout einstellt. In diesem Fall ist der Ausgangsstrom lout bezogen auf die Darstellung negativ.

In diesem Betriebsfall sperren T1, T2 und T4.

Stellt hingegen T1 im passiven Betrieb den Ausgangstrom Iout ein, ist T4 leitend und T2 und T3 sperren.
Wenn T2 im aktiven Betreib den Ausgangstrom Iout regelt, sind T1 und T4 leitend und T3 sperrt.

Die Ansprechschwellen sind dabei durch Z-Dioden in den entsprechenden Basis- bzw. Gate-Anschlüssen realisiert.

Bei negativem Ausgangsstrom Iout im aktiven Modus muss die Diode D1 durch T4 abgeschaltet werden, da ansonsten D1 den negativen Ausgangsstrom lout kurzschließen würde.
Weiterhin ist in der Schaltung gemäß Figur 4 Transistor T1 als MOS-FET ausgeführt. Dies hat den Vorteil, dass der Transistor technologiebedingt den negativen Ausgangsstrom lout durchlässt, da er inhärent über eine Dioden-Struktur verfügt. Diese technologiebedingte Diode lässt den Strom durch, selbst wenn T1 in seiner Hauptrichtung gesperrt ist.

Auch hier versteht sich von selbst, dass anstatt des Spannungs-Strom-Wandlers wiederum ein Strom-Strom-Wandler wie in Figur 3 gezeigt angewendet werden kann.

### Bezeichnungsliste

- T1, T2, T3, T4: Transistor
- D1: Diode
- Z1: Z-Diode
- OP1: Operationsverstärker
- IN: Eingang
- OUT: Ausgang
- Iout: Ausgangsstrom
- Uin: Eingangsspannung
- lin: Eingangsstrom
- +Uv, -Uv: Versorgungsspannung
- 100: Stromausgangsstufe
- 200: zu versorgende Einheit

## Patentansprüche

1. Stromausgangsstufe (100) aufweisend
• einen Eingang (IN),
• einen Ausgang (OUT) zur Verbindung mit einem Eingang einer mit Strom zu versorgenden Einheit (200),
• eine Regelstufe (OP1,T1,T2,Z1,R1), die den Ausgangsstrom (Iout) einstellt,
• eine Energieversorgungsstufe (Uv;Uv,-Uv), welche ausgeführt ist, Energie für den Ausgangsstrom (Iout) zur Verfügung zu stellen,
**dadurch gekennzeichnet, dass**
die Regelstufe (OP1,T1,T2,Z1,R1) einen ersten Transistor (T1), einen zweiten Transistor (T2;T3), einen Operationsverstärker (OP1) und eine Zenerdiode (Z1) aufweist, wobei
der zweite Transistor (T2, T3) über die Zenerdiode (Z1) angeschlossen ist,
im passiven Betriebsfall, wenn an den Ausgang (OUT) eine aktive Einheit (200) angeschlossen ist, der zweite Transistor (T2, T3) gesperrt ist, und der Operationsverstärker (OP1) über den ersten Transistor (T1) den Ausgangsstrom regelt, und
im aktiven Betriebsfall die Ausgangsspannung (U) des Operationsverstärkers (OP1) die Durchbruchspannung der Zenerdiode (Z1) überschreitet, und der zweite Transistor (T2, T3) den Ausgangsstrom (Iout) über die Energieversorgungsstufe (Uv;Uv,-Uv) so regelt, dass sie Energie für den Ausgangsstrom (lout) zur Verfügung stellt.

2. Stromausgangsstufe nach Anspruch 1, wobei die Regelstufe einen Spannung/Strom-Wandler oder ein Strom/Strom-Wandler aufweist.

3. Stromausgangsstufe nach Anspruch 1 oder 2, **dadurch gekennzeichnet, dass** die Stromausgangsstufe für den Bipolar-Betrieb ausgelegt ist.

4. Stromausgangsstufe nach einem der vorhergehenden Ansprüche 2 bis 3, **dadurch gekennzeichnet, dass** die Erkennungseinrichtung einen oder mehrere Transistoren (T1, T2; T1, T2, T3, T4) aufweist.

5. Stromausgangsstufe nach einem der vorhergehenden Ansprüche 2 bis 4, **dadurch gekennzeichnet, dass** die Erkennungseinrichtung zumindest einen MOS-FET Transistor (T4) aufweist.

## Claims

1. A current output stage (100) having
- an input (IN);
- an output (OUT) for connecting to an input of a unit (200) to be supplied with current;
- a control stage (OP1, T1, T2, Z1, R1) that sets the output current (Lout);
- an energy supply stage (Uv; Uv, -Uv) that is embodied to provide energy for the output current (Iout);
**characterized in that**
the control stage (OP1, T1, T2, Z1, R1) has a first transistor (T1), a second transistor (T2; T3), an operation amplifier (OP1), and a Zener diode (Z1), wherein the second transistor (T2, T3) is connected via the Zener diode (Z1),
during passive operation, when an active unit (200) is connected to the output (OUT), the second transistor (T2, T3) is blocked, and the operation amplifier (OP1) controls the output current via the first transistor (T1), and,
during active operation, the output voltage (U) of the operation amplifier (OP1) exceeds the breakthrough voltage of the Zener diode (Z1), and the second transistor (T2, T3) controls the output current (Iout) via the energy supply stage (Uv; Uv, -Uv) such that the latter provides energy for the output current (Iout).

2. The current output stage according to claim 1, wherein the control stage has a voltage/current converter or a current/current converter.

3. The current output stage according to claim 1 or 2, **characterized in that** the current output stage is designed for bipolar operation.

4. The current output stage according to any of preceding claims 2 or 3, **characterized in that** the detecting device has one or a plurality of transistors (T1, T2; T1, T2, T3, T4).

5. The current output stage according to any of preceding claims 2 through 3, **characterized in that** the detection device has at least one MOSFET transistor (T4).

## Revendications

1. Etage de sortie de courant (100) présentant
• une entrée (IN),
• une sortie (OUT) destinée à la connexion avec une entrée d'une unité (200) à alimenter avec du courant,
• un étage de régulation (OP1, T1, T2, Z1, R1) qui règle le courant de sortie (Iout),
• un étage d'alimentation en énergie (Uv, Uv, -Uv), lequel est conçu pour mettre à disposition de l'énergie pour le courant de sortie (Iout),
**caractérisé en ce que**
l'étage de régulation (OP1, T1, T2, Z1, R1) présente un premier transistor (T1), un deuxième transistor (T2, T3), un amplificateur opérationnel (OP1) et une diode Zener (Z1), où
le deuxième transistor (T2, T3) est raccordé par le biais de la diode Zener (Z1),
en fonctionnement passif, lorsqu'une unité (200) active est branchée sur la sortie (OUT), le deuxième transistor (T2, T3) est coupé, et l'amplificateur opérationnel (OP1) régule le courant de sortie par le biais du premier transistor (T1), et
en fonctionnement actif, la tension de sortie (U) de l'amplificateur opérationnel (OP1) dépasse la tension de claquage de la diode Zener (Z1), et le deuxième transistor (T2, T3) régule le courant de sortie (Iout) par le biais de l'étage d'alimentation en énergie (Uv ; Uv,-Uv) de telle manière qu'elle met à disposition de l'énergie pour le courant de sortie (Iout).

2. Etage de sortie de courant selon la revendication 1, dans lequel l'étage de régulation présente un convertisseur tension/courant ou un convertisseur courant/courant.

3. Etage de sortie de courant selon la revendication 1 ou 2, **caractérisé en ce que** l'étage de sortie de courant est conçu pour le fonctionnement bipolaire.

4. Etage de sortie de courant selon l'une des revendications précédentes 2 à 3, **caractérisé en ce que** le dispositif de reconnaissance présente un ou plusieurs transistors (T1, T2 ; T1, T2, T3, T4)).

5. Etage de sortie de courant selon l'une des revendications précédentes 1 à 4, **caractérisé en ce que** le dispositif de reconnaissance présente au moins un transistor MOS-FET (T4).
